# EUROPEAN PATENT APPLICATION

(11) **EP 3 824 997 A1**
(43) Date of publication of application: **26.05.2021**
(21) Application number: 19210163.2
(22) Date of filing: 19.11.2019
(51) Int. Cl.: B01J 2/02, B01J 2/18, C05C 9/00

(54) **A VIBRATING PRILLING BUCKET PARTICULARLY FOR PRILLING OF UREA**

(71) Applicant: CASALE SA, 6900 Lugano (CH)
(72) Inventor: RIZZI, Enrico, 22070 Casnate con Bernate (CO) (IT); MONTINI, Fabiano, 6807 Taverne (CH)
(74) Representative: M. Zardi & Co S.A.

(57) **Abstract**

A prilling bucket for prilling of a liquid, particularly for urea, comprising a rotating assembly, a vibrating assembly, a magnetostrictive actuator disposed to impart vibration to said vibrating assembly, wherein said magnetostrictive actuator is part of the rotating assembly and is firmly connected with said vibrating assembly and the bucket comprises a slip connector arranged to transfer electrical power to said actuator.

## Description

### Field of the invention

The invention relates to the prilling of urea, particularly to the control of a prilling bucket used in the finishing of urea.

### Prior Art

In a urea synthesis process, urea is synthesized starting from ammonia and carbon dioxide. In most urea plants, an aqueous solution of urea is produced in a urea synthesis section; this solution is then processed in one or more recovery sections to remove unconverted matter, mostly in the form of ammonium carbamate, and obtain a solution of urea and water with as low as possible contaminants and unconverted matter.

In a finishing section for the production of solid urea, water is removed from this purified urea solution to form a highly concentrated urea melt.

A known technique for converting the urea melt into solid urea is the prilling process where small drops of the urea melt fall from top of a prilling tower in counter-current with cooling air, and solidified drops of urea are collected at the bottom of the tower.

A first challenge of this process is how to generate suitable droplets of urea from an input feed of urea melt. Regardless of the technique for its production, the droplets will be statistically dispersed around an average size, leading to a certain dispersion of the size of the solid product around a desired size, for example granules of 2 mm diameter. A large dispersion means that a considerable fraction of the solid product may be beyond acceptability (either because the granules are too large or too small). There is therefore the need to produce a flow of droplets with as low as possible dispersion. Ideally, a flow of particles having the same size is called a monodisperse flow.

A technique for producing the droplets is to feed the urea melt to a fast rotating bucket with a perforated side wall. Said bucket is installed on top of a prilling tower and rotates around a vertical axis; accordingly the liquid is ejected from the perforated side wall in the form of small droplets. In an effort to approach the monodisperse flow, it has been found that vibrating the bucket vertically along to the axis of rotation is advantageous because the vibration helps break the liquid jets, which are ejected from the fast rotating perforated bucket, into small and uniform droplets.

The whole bucket or only a part thereof may be vibrated. EP 1 624 957 discloses a vibrating prilling bucket and EP 2 008 709 discloses an improvement wherein only the side wall of the bucket is vibrated to reduce the vibrating mass and related inertial stress.

In the prior art of vibrating buckets, the vibration is generated pneumatically, for example with a pneumatically operated turbine with an eccentric mass. These systems have drawbacks in that they consume pressurized air; they transfer a considerable stress to the bucket; they do not provide accurate control of the vibration.

It has been found that the amplitude and frequency of the vibration has a substantial influence on the formation of droplets ejected by the perforated wall of the bucket. Therefore an accurate control of the vibration is deemed crucial to approach a monodispersion of droplets (i.e. droplets having all the same size) and to obtain a solid product of a better quality.

A more recent development of vibrating prilling buckets is the use of a magnetostrictive device as a vibration engine. A magnetostrictive device includes a magnetostrictive element which changes its length due to its magnetization. By applying a time-varying electrical current with a proper frequency and magnitude, this device can therefore deliver a mechanical vibration at a well-defined frequency and amplitude depending on the frequency and voltage of the excitation current. The use of a magnetostrictive engine appears promising to replace mechanical or pneumatic vibrators due to its extremely precise control of the vibration.

A prior art rotating prilling bucket with magnetostrictive-powered vibration includes a magnetostrictive device mounted in a non-rotating part of the prilling bucket. The vibration is therefore transmitted via a suitable link from the non-rotating part to the rotating and vibrating assembly of the bucket. The link may include for example a suitable bearing.

This mechanical link however introduces a certain clearance due to working tolerances and may have a dumping effect. Consequently, the very high precision of the vibration generated by the magnetostrictive device may be affected. Furthermore the amplitude of vibration, which is very small being typically in the range of 10 - 20 microns, could be reduced to the point that vibration is no longer effective for the purpose. Finally, the transmission of vibrations through a bearing can reduce the lifetime of the bearing, with consequent reduction of reliability of the system.

### Summary of the invention

The invention aims to overcome the above limitations. The invention aims to improve the current technique of magnetostrictive vibrating prilling buckets. More particularly the invention aims to improve the accuracy, precision and amplitude of the vibration, avoiding that the intrinsic high precision of the magnetostrictive device is lost due its mechanical connection to the vibrating assembly.

The above aims are reached with a prilling bucket according to claim 1.

In the bucket of the invention, the magnetostrictive actuator is a rotating part.

The bucket includes a rotating assembly and a vibrating assembly.

The rotating assembly may include one or more components of the prilling bucket.

The vibrating assembly may include part or all of the rotating assembly. In some embodiments, the rotating assembly and the vibrating assembly coincide, which means that rotating components are also vibrating. For example the whole bucket rotates and vibrates during operation. In other embodiments the vibrating assembly may include only some of the components of the rotating assembly and, accordingly, the bucket includes one or more components which, in use, rotate but not vibrate.

The magnetostrictive actuator is part of the rotating assembly and is rigidly connected with the vibrating assembly. Therefore, the magnetostrictive actuator rotates together with the rotating part of the vibrating assembly. The bucket further comprises a slip ring arranged to transfer electrical power to said magnetostrictive actuator. In some embodiments the vibrating assembly may include a rotating part and a non-rotating part and the magnetostrictive actuator belongs to the rotating part.

By providing the magnetostrictive actuator as a rotating part, the vibration can be transmitted via a rigid connection which has no damping effect. The performance of the magnetostrictive actuator is therefore preserved in the transmission of the vibration to the vibrating assembly.

The vibration imparted to the assembly can be controlled in a more accurate way compared to the prior art system where the precision is affected by the link between a non-rotating magnetostrictive actuator and the rotating and vibrating parts. Accordingly, the invention can better approach the goal of achieving a monodispersed flow of droplets.

Some preferred embodiments are described in the dependent claims.

A preferred application is the prilling of urea. An aspect of the invention is the use of the inventive prilling bucket for the prilling of a urea melt and the production of solid prills of urea. The urea melt preferably contains more than 99% urea, for example at least 99.6% urea.

### Description of preferred embodiments

In a preferred embodiment, the prilling bucket has a perforated side wall which is part of the rotating assembly and also part of the vibrating assembly. The perforated side wall delimits laterally a chamber for containing the liquid to be prilled. In use, liquid jets are ejected through the perforated side wall, due to the centrifugal force of rotation. The vibration of the perforated side wall helps breaking the liquid jets into uniform droplets.

The slip connector is preferably a slip ring. Said slip ring may include, in a preferred embodiment, an outer cylinder element and an inner cylinder element, the outer element being coaxial around the inner element. The outer element is static and the inner element is rigidly fixed to the actuator. The outer element comprises brushes or wires and the inner element comprises electrically conductive rings in a slip contact with said brushes or wires.

The magnetostrictive actuator is adapted to provide a vibration along the axis of rotation of the rotating assembly. In an embodiment, the magnetostrictive actuator may be in the form of an elongated body extending along said axis.

The magnetostrictive actuator can be connected to the vibrating assembly via a rigid element. Accordingly, the actuator is substantially integral with the vibrating assembly.

Said rigid element may have an elongate shape and more preferably has the shape of a rod. Said rigid element may have a first end rigidly connected to the actuator and a second end, opposite to the first end, rigidly connected to a component of the vibrating assembly.

The static part is a part of the bucket which neither rotates nor vibrates during operation. The static part may act as a support of the bucket. For example the bucket may be installed at the top of a prilling tower and supported by the static part. The static part may include a hollow tube which is also the feed pipe of the liquid to be prilled.

In a particularly preferred embodiment, the bucket includes a frame defining a chamber for containing the liquid to be prilled and the perforated wall is connected to said frame via suspension means adapted to act as a vibration isolator and vibrationally decouple the perforated wall from the frame.

More preferably, the actuator is firmly connected to the rotating and vibrating assembly via a rigid rod; one end of the rod is secured to the actuator; the opposite end of the rod is secured to a bottom plate of the prilling bucket; said bottom plate is rigidly connected to the perforated said wall of the bucket, so that the bottom plate and the perforated side wall are made integral and vibrates together; the perforated side wall is connected to a frame of the bucket via a deformable seal which acts as a vibration isolator (e.g. a filter) so that the vibration of the side wall is mechanically filtered and not transmitted from the side wall to the frame.

The invention is now elucidated with the help of the figures, wherein:

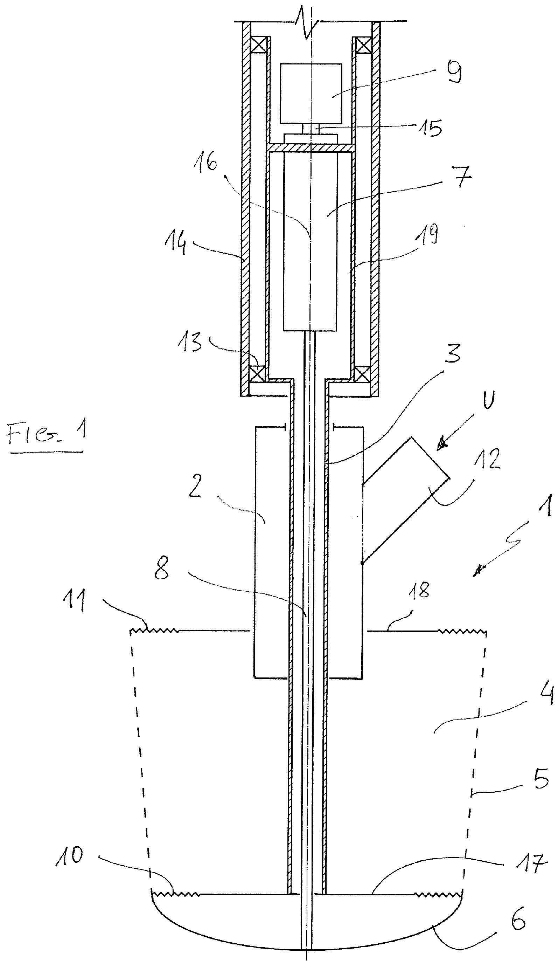

Fig. 1 is a sketch of a prilling bucket according to a preferred embodiment.

Fig. 1 illustrates the following items.
- 1: Prilling bucket
- 2: Static feed pipe
- 3: Rotating shaft
- 4: Liquid chamber
- 5: Perforated side wall
- 6: Bottom of the bucket
- 7: Magnetostrictive actuator
- 8: Transmission rod
- 9: Slip ring
- 10: Lower seal of the side wall
- 11: Upper seal of the side wall
- 12: Inlet pipe
- 13: Bearing
- 14: Frame
- 15: Inner cylinder
- 16: Rotation axis
- 17: Lower flange
- 18: Cover of the bucket
- 19: Upper section of shaft

The prilling bucket 1 is mounted for example vertically at top of a prilling tower.

The bucket 1 includes a shaft 3, which is configured to rotate around the axis 16 supported by bearings 13 relative to the frame part 14. The shaft 3 is connected to a suitable motor, not illustrated.

The shaft 3 passes through the static feed pipe 2, which does not rotate in operation. Said feed pipe 2 has an inlet pipe 12 for introduction of a liquid, for example urea melt U. From a bottom opening of the feed pipe 2, the urea melt U enters the liquid chamber 4.

The bottom end of the shaft 3 is fixed to the lower flange 17. The lower flange 17 in turn is connected to the perforated side wall 5 and to the bottom 6 via the lower seal 10. Said lower seal 10 is able to transmit a torque and, therefore, the perforated side wall 5 is put into rotation when the shaft 3 rotates. However the seal 10 is highly deformable in the vertical direction of the axis 16, being thus unable to transfer a vertical force, particularly if the force alternates with a high frequency. The upper seal 11 is similar, being flexible in the direction of the axis 16.

The magnetostrictive actuator 7 is fixed to an upper section 19 of the rotating shaft 3. The magnetostrictive actuator 7 rotates together with the shaft 3 and all other rotating parts of the bucket 1.

The magnetostrictive actuator 7, in addition, is rigidly connected to the bottom 6 via the rod 8. The drive shaft 3 is hollow and the rod 8 is mounted coaxial with said shaft 3. The bottom end of the rod 8 is fixed to the bottom plate 6 and the bottom plate 6 is fixed to the perforated side wall 5. The assembly of the bottom plate 6 and perforated side wall 5 is connected to the lower flange 17 and to the cover 18 by means of the seals 10, 11.

The magnetostrictive actuator 7 is powered by a slip ring 9. The slip ring is connected to a suitable electrical power source and comprises a static outer ring and a rotating inner ring 15. A suitable electric contact is established between the outer ring and the inner ring, for example with brushes or wires in contact with conductive rings.

When energized, the magnetostrictive actuator 7 oscillated according to the direction of the axis 16 with a frequency and amplitude depending on the excitation signal. This vibration is transmitted to the perforated side wall 5 via the rigid connection of the rod 8 and the bottom 6. The vibration is however filtered by the seals 10 and 11, so that it not transmitted to the flange 17 and cover 18.

In operation, the shaft 3 rotates the lower flange 17, the perforated side wall 5 and the cover 18. The magnetostrictive actuator 7 rotates as well, being fixed to the bottom 6 and the upper part 19 of the shaft 3. The perforated side wall is also vibrated along the axis 16. The liquid urea melt U contained in the liquid chamber 4 is ejected from the perforated side wall 5 due to centrifugal force; the vibration of the side wall 5 helps break the liquid jets into drops of a regular size and shape.

## Claims

1. A prilling bucket for prilling of a liquid, comprising:
a static part;
a rotating assembly which is arranged to rotate relative to the static part and around a main axis of the bucket,
a vibrating assembly which includes part or all of the rotating assembly, and is arranged to oscillate relative to the static part along the direction of said main axis;
a magnetostrictive actuator disposed to impart vibration to said vibrating assembly;
wherein the rotating assembly includes said magnetostrictive actuator and the magnetostrictive actuator is rigidly connected with said vibrating assembly;
the bucket further comprising a slip connector arranged to transfer electrical power to said magnetostrictive actuator.

2. A bucket according to any of the previous claims wherein said slip connector is a slip ring.

3. A bucket according to claim 2 wherein said slip ring includes an outer cylinder element and an inner cylinder element, the outer element being coaxial around the inner element, the outer element being static and the inner element being rigidly fixed to the actuator, the outer element comprising brushes or wires and the inner element comprising conductive rings in a slip contact with said brushes or wires.

4. A prilling bucket according to any of claims 1 to 3 wherein the actuator is firmly connected to the vibrating assembly via a rigid element.

5. A bucket according to claim 4, wherein the rigid element has an elongate shape and preferably has the shape of a rod or a tube.

6. A bucket according to claim 4 or 5 wherein the rigid element has a first end rigidly connected to the actuator and a second end, opposite to the first end, rigidly connected to a component of the vibrating assembly.

7. A prilling bucket according to any of the previous claims, wherein the static part includes a hollow tube which is also a feed tube of the liquid to be prilled.

8. A prilling bucket according to any of the previous claims wherein the rotating assembly includes a perforated side wall of the bucket, and said perforated side wall is also part of the vibrating assembly.

9. A bucket according to claim 8 wherein the bucket includes a frame defining a chamber for containing the liquid to be prilled and the perforated wall is connected to said frame via suspension means adapted to act as a vibration isolator and vibrationally decouple the perforated wall from the frame.

10. A bucket according to claim 9 wherein the actuator is firmly connected to the rotating and vibrating assembly via a rigid rod; one end of the rod is secured to the actuator; the opposite end of the rod is secured to a bottom plate of the prilling bucket; said bottom plate is integral with the perforated said wall of the bucket, so that the bottom plate and the perforated side wall vibrates together; the perforated side wall is connected to a frame of the bucket via a deformable seal which acts as said vibration isolator so that the vibration is not transmitted from the side wall to the frame.

11. A bucket according to any of the previous claims, wherein the vibrating assembly includes a rotating part and optionally a non-rotating part, and the magnetostrictive actuator is part of the rotating part of the vibrating assembly.

12. A prilling bucket according to any of the previous claims, for the prilling of a urea melt.

13. Use of a prilling bucket according to claim 12 for the prilling of urea melt and the production of solid prills of urea.
